# EUROPEAN PATENT APPLICATION

(11) **EP 1 980 992 A1**
(43) Date of publication of application: **15.10.2008**
(21) Application number: 07707307.0
(22) Date of filing: 24.01.2007
(51) Int. Cl.: G06T 1/00, G09G 5/00, H04N 5/262, H04N 5/445, H04N 5/66, H04N 7/173

(54) **IMAGE REPRODUCTION SYSTEM, IMAGE REPRODUCTION METHOD, AND IMAGE REPRODUCTION PROGRAM**

(30) Priority: 24.01.2006 JP 2006015433
(71) Applicant: NEC Corporation, Minato-ku Tokyo 108-8001 (JP)
(72) Inventor: KASUTANI, Eiji, Tokyo; 108-8001 (JP); SATOU, Takami, Tokyo; 108-8001 (JP)
(74) Representative: Betten & Resch
(86) International application number: PCT/JP2007/051060
(87) International publication number: WO 2007/086408

(57) **Abstract**

When switching a content playback, it is possible to easily judge that switching has been performed. Switching source content metadata acquisition means (21) and switching destination content metadata acquisition means (22) acquire the metadata on the switching source content currently displayed and the metadata on the switching destination content to be displayed next from a metadata storage unit (31), respectively. Display effect decision means (23) references a display effect table stored in a display effect storage unit (33) and selects a display effect according to a combination of the metadata for the switching source content and the metadata for the switching destination content. Display effect insert means (24) calls a switching destination content from the content storage unit (32), changes an image of the switching destination content according to the display effect decided by the display effect decision means (23), and outputs the image to an output device (4). The output device (4) displays the image.

## Description

### [APPLICABLE FIELD IN THE INDUSTRY]

The present invention relates to an image playback system, an image playback method, and an image playback program for playing back a plurality of still images or moving images while automatically or manually switching them, and more particularly to an image playback system, an image playback method, and an image playback program for enabling a division of images to be easily identified.

### [BACKGROUND ART]

Conventionally, as a method of browsing the still images recorded into a record medium, the image playback apparatus having a function of sequentially displaying the recorded images by a slide show, or a function of manually switching them according to a user's instruction has been provided (for example, see Patent document 1).

Further, as a method of browsing the moving images recorded into the record medium such as a hard disc recorder, likewise, the function of sequentially playing back recorded moving images by a slide show, or the function of manually switching the moving images, which is played back, according to a user's instruction is known. With the latter, the method is a method that is usually called a zapping at the moment of viewing a television broadcast, that is, a method of searching for a desired moving image while manually switching the moving images, which are displayed on a broadcast receiving terminal, by appropriately switching reception channels with a remote control operation.

Further, the video switchover device has been provided for naturally and effectively switching a video image (for example, see Patent document 2). In the Patent document 2, it is described that selecting a switchover method depending upon the kind of the video image output at present and the kind of the video image succeeding hereto, and switching the video image by the method makes it possible to naturally and effectively switch the video images that are obtained before and after the switchover. For example, it is shown as an example that in a karaoke sing-along machine, a cross-fade etc. is employed as a switchover technique for smoothly switching a screen during a performance of a karaoke song for a purpose of eliminating the unnatural switchover of the video image such that the background becomes blue and then gray between the end of a previous video image and the start of the next one. Such a configuration enables giving an impression that a switchover is natural and smooth at the moment of switching the video image.

Further, the information processor for easily inserting into the scenes a transition clip that is suitable for switching the scene at the time of editing the multimedia such as the video image has been provided (for example, see Patent document 3). In the Patent document 3, it is described that the sophisticated video image can be prepared by inserting a transition clip at a scene change, and adding a video effect in a case of editing two scenes to join them together into one video, or in a case of continuously playing back two scenes or more. Such a configuration enables a user as well who has no specialized knowledge on the video editing to easily prepare the sophisticated video image.

Patent document 1: JP-P2003-209809A (paragraphs 0012 to 0016)
Patent document 2: JP-P2000-101910A (paragraphs 0022 to 0024)
Patent document 3: JP-P2004-228779A (paragraphs 0066 to 0069)

### [DISCLOSURE OF THE INVENTION]

### [PROBLEMS TO BE SOLVED BY THE INVENTION]

As mentioned above, inserting the video effect as described in the Patent documents 2 and 3 at the time of switching the still image or the moving image being viewed (hereinafter, denotes as a content) with the method of the slide show described in the Patent document 1 or the like causes a viewer to easily recognize a division of the contents. Further, the video effect such as the cross-fade enables the viewer to view the content in such a manner that the content is naturally and smoothly switched.

However, when the viewer makes an oversight of the video effect inserted at the time of switching the content, there is a possibility that he/her cannot grasp that the content has been switched. For example, in the case that the viewer has took his/her eyes off the screen in a moment that the content has been switched, for example, in the case that the viewer slightly has looked away from the screen, it is difficult for he/her to notice that the content has been switched.

A person having switched the content with a remote control operation or the like can recognizes the switchover of the content even though he/her looks away because he/her has switched the content of his/her own will; however in the case that the content is automatically switched according to a pre-decided procedure, or in the case that the viewer is a third person other than the person having switched the content, looking away also causes a possibility that the switchover of the content is not noticed to occur.

Thereupon, the present invention has an object of providing an image playback system, an image playback method, and an image playback program for enabling whether the content has been switched to be easily determined at the moment of switching the playback of the content.

The present invention is an image playback system for playing back a plurality of images while switching them, characterized in comprising: a display effect deciding means for deciding one display effect from among a plurality of display effects pre-decided based upon a combination of a metadata for a before-switching image and a metadata for an after-switching image; and a displaying means for changing the after-switching image according to the display effect decided by said display effect deciding means and displaying it.

The present invention is an image playback system for playing back a plurality of images while switching them, characterized in comprising: a first feature extracting means for extracting a feature for a before-switching image; a second feature extracting means for extracting a feature for an after-switching image; a display effect deciding means for deciding a display effect based upon a combination of the feature extracted by said first feature extracting means and the feature extracted by said second feature extracting means; and a displaying means for changing the after-switching image according to the display effect decided by said display effect deciding means and displaying it.

The display effect deciding means may decide the display effect with which a switchover is emphasized all the more as a difference between a feature of the before-switching image and a feature of the after-switching image becomes small . In accordance with the structure, there exists an effect that whether the content has been switched can be easily determined.

The display effect deciding means may decide a background color of the after-switching image based upon a difference between a representative color of the before-switching image and a representative color off the after-switching image. In accordance with the structure, there exists an effect that whether the content has been switched can be easily determined by the background color.

The display effect deciding means may specify the after-switching image based upon a pre-decided playback order of the images. In accordance with the structure, it can play back image sequentially automatically.

The present invention is an image playback method of playing back a plurality of images while switching them, comprising: a display effect decision step of deciding one display effect from among a plurality of display effects pre-decided based upon a combination of a metadata for a before-switching image and a metadata for an after-switching image; and a display step of changing the after-switching image according to the display effect decided in said display effect decision step and displaying it.

The present invention is an image playback method of playing back a plurality of images while switching them, comprising: a first feature extraction step of extracting a feature for a before-switching image; a second feature extraction step of extracting a feature for an after-switching image; a display effect decision step of deciding a display effect based upon a combination of the feature extracted in said first feature extraction step and the feature extracted in said second feature extraction step; and a display step of changing the after-switching image according to the display effect decided in said display effect decision step and displaying it.

In the display effect decision step, deciding the display effect with which a switchover is emphasized all the more as a difference between a feature of the before-switching image and a feature of the after-switching image becomes small. In accordance with the structure, there exists an effect that whether the content has been switched can be easily determined.

In the display effects decision step, deciding a background color of the after-switching image based upon a difference between a representative color of the before-switching image and a representative color of the after-switching image. In accordance with the structure, there exists an effect that whether the content has been switched can be easily determined.

In the display effect decision step, specifying the after-switching image based upon a pre-decided playback order of the images. In accordance with the structure, it can play back image sequentially automatically.

The present invention is an image playback program being installed into a controlling means for controlling a system, said system playing back a plurality of images while switching them, characterized in causing said controlling means to execute: a display effect decision process of deciding one display effect from among a plurality of display effects pre-decided based upon a combination of a metadata for a before-switching image and a metadata for an after-switching image; and a display process of changing the after-switching image according to the display effect decided in said display effect decision process and displaying it.

### [AN ADVANTAGEOUS EFFECT OF THE INVENTION]

In accordance with the present invention, there is an effect that the display of the after-switching image is enabled to become a more effective display, into which the features of the before-switching image and the after-switching image have been reflected, without requesting a setting operation that troubles a user in a case of switching and playback-displaying the image, and whether the content has been switched can be easily determined.

### [BRIEF DESCRIPTION OF THE DRAWINGS]

[Fig. 1] Fig. 1 is a block diagram illustrating a first embodiment of the image playback system in accordance with the present invention.
[Fig. 2] Fig. 2 is a flowchart illustrating an operation of the image playback system in the first embodiment.
[Fig. 3] Fig. 3 is an explanatory view illustrating a registration example of a display effect table.
[Fig. 4] Fig. 4 is a block diagram illustrating a second embodiment of the image playback system in accordance with the present invention.
[Fig. 5] Fig. 5 is a flowchart illustrating an operation of the image playback system in the second embodiment.
[Fig. 6] Fig. 6 is a block diagram illustrating a third embodiment of the image playback system in accordance with the present invention.
[Fig. 7] Fig. 7 is a block diagram illustrating a fourth embodiment of the image playback system in accordance with the present invention.
[Fig. 8] Fig. 8 is a block diagram illustrating a fifth embodiment of the image playback system in accordance with the present invention.

### [DESCRIPTION OF NUMERALS]

1 input device
2 data processing device
21 switching source content metadata acquiring means
22 switching destination content metadata acquiring means
23 display effect deciding means
24 display effect inserting means
3 storage device
31 metadata storage unit
32 content storage unit
33 display effect storage unit
4 output device

### [BEST MODE FOR CARRYING OUT THE INVENTION]

### EMBODIMENT 1

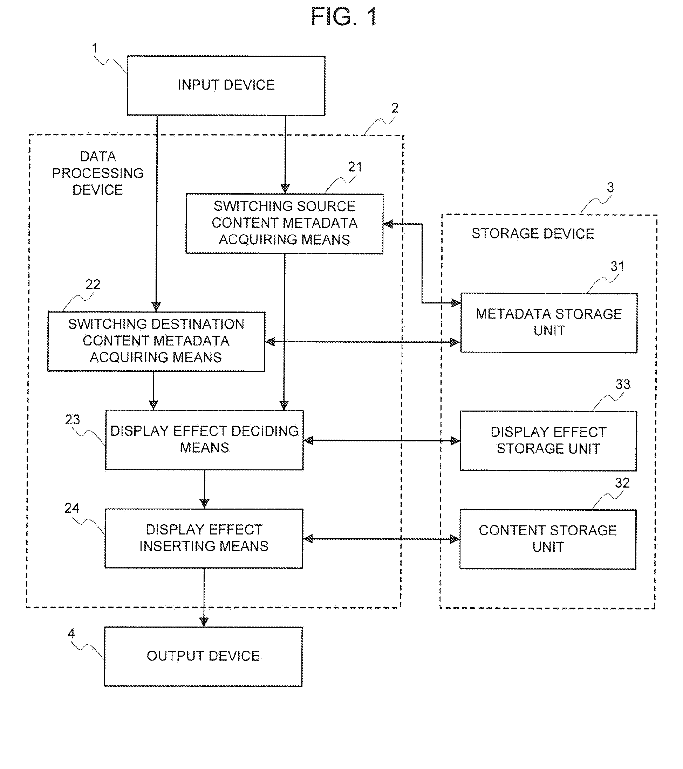

Next, the best mode for carrying out the invention will be explained in details by making a reference to the accompanied drawings. Fig. 1 is a block diagram illustrating a first embodiment of the image playback system in accordance with the present invention. Upon making a reference to Fig. 1, the first embodiment of the present invention includes an input device 1, a data processing device 2 that operates under control of a program, a storage device 3 for storing information, and an output device 4.

The input device 1, which is comprised of input devices such as a keyboard, a keypad, a pointing device, and a remote controller, can designate the content being switched in some cases, and can input an instruction for switching the content in some cases.

Further, the output device 4, which is an output device such as a displaying device and a printing device, displays the image. As an image, there exists, for example, the still image photographed with a digital camera, and the moving image or the like recorded into a hard disc recorder etc. is thinkable.

The storage device 3 is provided with a metadata storage unit 31, a content storage unit 32, and a display effect storage unit 33.

Biography information such as a title, a genre, and an electronic program guide (EPG) data on each of the contents such as the still image and the moving image, and a unique identifier for each content have been stored into the metadata storage unit 31. Additionally, the so-called metadata is a data in which information on the data (content) has been described. It is prepared as a tool for helping a targeted data to be found out from an enormous volume of the data. The image data etc. greatly receives the benefits from the metadata because it cannot be keyword-retrieved in a simple manner so long as it remains unchanged.

Each of the contents such as the still image and the moving image is stored into the content storage unit 32. The content storage unit 32 may pre-store these contents, and may receive the content with a broadcast or a streaming to store it when a necessity for displaying it arises. Additionally, at the moment that the content is stored into the content storage unit 32, simultaneously therewith, the metadata of the content may be stored into the metadata storage unit 31.

The display effect storage unit 33 stores a display effect table indicative of the kind of the effects that are displayed in a boundary between the content and the content. The display effect table includes a metadata of a switching source content, a metadata of a switching destination content, and a display effect. As a display effect, for example, there exists a change in a background color or a background image. Further, there exist parameters such as a start time and a duration time for each display effect. Additionally, the following explanation is made on the assumption that the display effect and its parameter are uniquely decided responding to a combination of the metadata of the switching source content and the metadata of the switching destination content.

Additionally, a control unit of the image playback system takes the control under which the content, the metadata, or the like is stored into the storage device 3.

The data processing device 2 is provided with a switching source content metadata acquiring means 21, a switching destination content metadata acquiring means 22, a display effect deciding means 23, and a display effect inserting means 24.

When a request for switching the content is made by the input device 1, the switching source content metadata acquiring means 21 acquires the metadata of the content that is currently being displayed (hereinafter, referred to as a switching source content, or a before-switching content) from the metadata storage device 31 and outputs it to the display effect deciding means 23.

When an identifier of the switching destination of the content is input from the input device 1, the switching destination content metadata acquiring means 22 acquires the metadata of the content that becomes a target of the next display (hereinafter, referred to as a switching destination content, or an after-switching content) from the metadata storage device 31 and outputs it to the display effect deciding means 23. It is also possible that the switching destination content is decided by a designation through the input device 1 in some cases, is decided based upon a content display order defined in advance in some cases, and is decided at random in some cases.

The display effect deciding means 23 selects one display effect from among a plurality of the display effects that are included in the display effect storage unit 33 based upon a combination of the metadata for the switching source image and the metadata for the switching destination image. Further it can decide the parameter as well necessary for the display effect.

The display effect inserting means 24 calls up the switching destination content from the content storage unit 32, changes the image of the switching destination content according to the display effect decided by the display effect deciding means 23, and outputs it to the output device 4, and the output device 4 displays it.

In the first embodiment, the displaying means is realized with the display effect inserting means 24 and the output device 4.

Additionally, the image playback system can be realized with a computer, and a central processing unit (CPU) of the computer operates according to a program for realizing the foregoing functions, thereby enabling each of the components constituting the image playback system, that is, each of the switching source content metadata acquiring means 21, the switching destination content metadata acquiring means 22, the display effect deciding means 23, and the display effect inserting means 24 to be realized. The fact that each of the components constituting the image playback system can be realized with the computer and can be realized as a program is not limited to the first embodiment, and with other embodiments, the situation is similar.

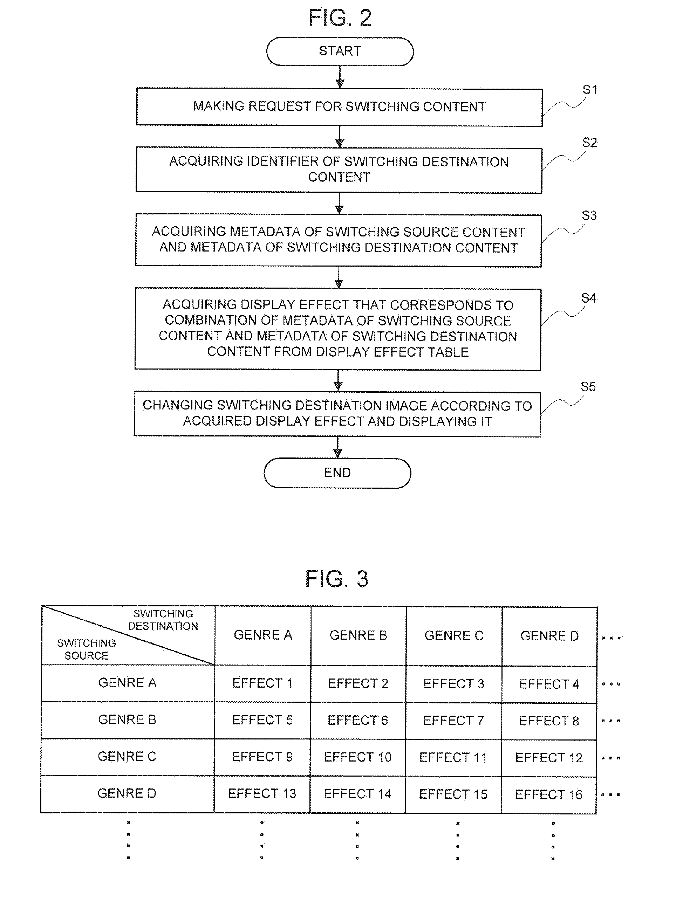

Next, an operation of this embodiment will be explained in details by making a reference to Fig. 1 and Fig. 2. Fig. 2 is a flowchart illustrating an operation of the image playback system in the first embodiment.

In this embodiment, a user operates the input device 1, thereby triggering a start of the operation. At first, the identifier of the content to be switched is designated with a remote controller or a keyboard (step S1). Additionally, it is assumed that some content has been displayed as a switching source content on the output device 4 before the user operates the input device 1.

With the identifier of the switching destination content input from the input device 1 in the step S1, the switching destination content metadata acquiring means 22 investigates whether the content that corresponds to the identical identifier has been stored into the content storage unit 32 (step S2). And, when the content that corresponds to the identifier input from the input device 1 has been stored into the content storage unit 32, the switching destination content metadata acquiting means 22 acquires the metadata of the content (switching destination content) that corresponds to the input identifier from the metadata storage unit 31.

When a request for switching the content is made, the switching source content metadata acquiring means 21 acquires the metadata of the switching source content from the metadata storage unit 31 (step S3).

Next, the display effect deciding means 23 selects the corresponding display effect from the display effect table based upon a combination of the metadata for switching source image and the metadata for the switching destination image, and simultaneously therewith, decides the parameter responding to a necessity (step S4).

Fig. 3 is an explanatory view illustrating a registration example of the display effect table. The display effect table is information including the metadata of the switching source content, the metadata of the switching destination content, and the display effect. In Fig. 3, the case of registering genres of the contents as a metadata of the switching source content and a metadata of the switching destination content, respectively, is exemplified. The display effect is decided corresponding to the genre of the switching source content and the genre of the switching destination content. The so-called genre of the content is, for example, a classification of the contents such as a movie, a drama and a sport.

Further, there exist a dissolve, a wipe, a cut-in, a cut-out, a cross-fade, a slide, etc. as a display effect. As a setting of the display effect, for example, the implementation such that the dissolve is inserted for a switchover between the contents having the identical genre, and the wipe is inserted for a switchover between the contents having the different genre is possible. For example, the dissolve can be set as "display effect 1" of the display effect table shown in Fig. 3, and the wipe can be set as "display effect 2". In such a manner, the display effect can be flexibly selected, depending upon a transition from which kind of the switching source content to which kind of the switching destination content.

And, the display effect inserting means 24 calls up the switching destination content from the content storage unit 32, changes the background of the switching destination image according to the display effect acquired from the display effect table, and displays it (step S5).

In this claimed invention, so as to make a switchover of the content clearly understandable to the viewer, the display effect with which a switchover of the content can be clearly understood (in some cases, it is expressed as "a switching effect is large") is desirably set for the display effect table. The so-called display effect having a large switching effect is, for example, a display effect that gives a sharp impression or a clear impression, and the cut-in, the cut-out, the slide, or the like is listed.

Further, the display effect having a large switching effect can be obtained by setting display time to a large value even though the display effect is identical. For example, when the genre of the switching source content and that of the switching destination content are identical to each other, a display time of the dissolve may be set to a large value as a display effect because originally it is difficult to grasp that the content has been switched.

In addition hereto, a feature pre-extracted matadata by metadata may be employed as a base for setting the display effect. That is, the display effect is set responding to a difference between the extracted features. As a feature, for example, a to-be-targeted age, a popularity level, an emotion level, or the like is thinkable.

In an example shown in Fig. 3, "the emotion level" is pre-extracted genre by genre as a feature with a genre A, a genre B, a genre C, and a genre D assumed to be a movie, a drama, a music, and a variety, respectively. The case that the extracted "emotion level" is 10 with both the movie and the drama, 5 with the music, and 2 with the variety is exemplified. For example, in a case of switching the movie and the drama each having an identical "emotion level", a display time of the dissolve is set to a large value as "effect 2" and "effect 5" that correspond hereto because originally it is difficult to grasp that the content has been switched.

Further, in this claimed invention, the display indicating that the content is an after-switching content may be made, for example, the after-switching content may be surrounded with a frame in some cases, or a caption may be displayed in some cases until a predetermined time elapses after the switchover so that the image, which is currently being displayed, can be recognized to be an image belonging to an after-switching content even after the content has already been switched.

Additionally, in this embodiment, instead of the step S1 of designating an identifier of the content to be switched, by giving an instruction for switching the content, it is also possible to call up an identifier of the content to be displayed according to a pre-decided content display order. In this case, an instruction for switching the content can be given with a single button operation alone of the remote controller or the keyboard.

Next, an effect of this embodiment will be explained. In this embodiment, the display effect of the switching destination content can be flexibly selected, depending upon a transition from which switching source content to which switching destination content. The effect of this embodiment lies in a point that not only a switchover of the content can be visually recognized in a simple manner, but also the switched content can be grasped even in the case that the viewer takes his/her eyes off the screen in a moment that the content has been switched because the display effect is added by reflecting the switching source content as well into the selection of the display effect.

Further, there exists an effect that setting the display effect having a large switching effect makes it possible to easily recognize that the content has been switched. In addition hereto, there exists an effect that the image, which is currently being displayed, can be recognized to be an image belonging to an after-switching content even after the content has already been switched.

### EMBODIMENT 2

Next, the best mode for carrying out the second invention of the present invention will be explained in details by making a reference to the accompanied drawings.

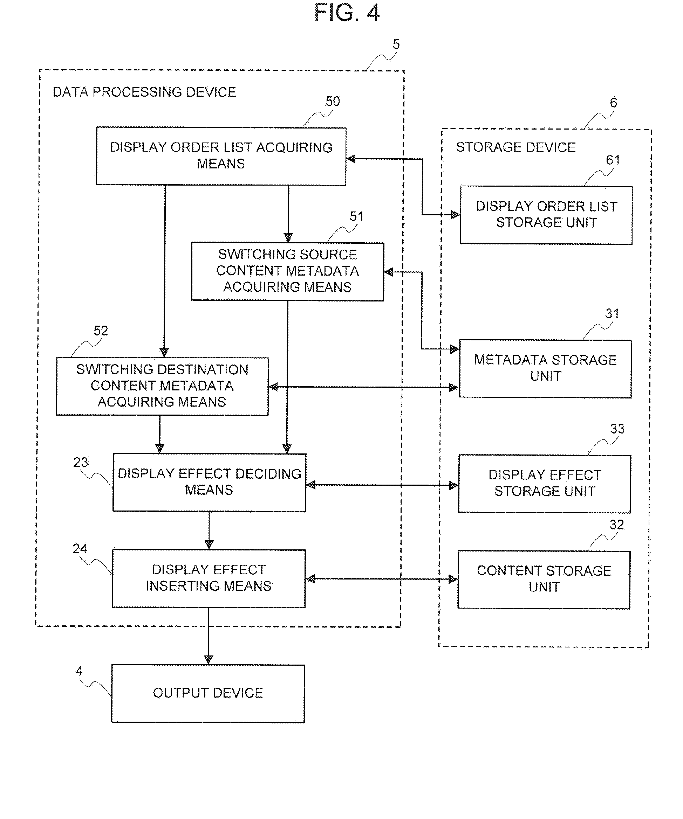

Fig. 4 is a block diagram illustrating a second embodiment of the image playback system in accordance with the present invention. The image playback system shown in Fig. 4 is provided with a data processing device 5, a storage device 6, and an output device 4.

Upon making a reference to Fig. 4, the second embodiment of the image playback system of the present invention differs from the first embodiment in a point that the data processing device 5 includes a switching source content metadata acquiring means 51, and a switching destination content metadata acquiring means 52 that have replaced the switching source content metadata acquiring means 21 and the switching destination content metadata acquiring means 22 of the data processing unit 2 of the first embodiment shown in Fig. 1, respectively, in a point that a display order list acquiring means 50 has been added, in a point that a storage device 6 has a display order list storage unit 61 added besides a configuration of the storage device 3, and in addition hereto, in a point the input device 1 does not exist.

The display order list storage unit 61 stores a list in which the order in which the content is switched has been described. Specifically, it stores an identifier of the content and its playback order together. In particular, in the case of still images, it can store their display time as well altogether.

The display order list acquiring means 50 acquires an identifier of the switching destination content based upon the playback order described in the list stored by the display order list storage unit 61 when a pre-decided time elapses. In the case of still images, the display order list acquiring means 50 can decide their display time according to the display order list etc. Further, in the case of moving images, besides, it can make a request for switching contents when a playback from the head to the end is finished.

The switching source content metadata acquiring means 51 acquires the metadata that corresponds to an identifier of the switching source content acquired by the display order list acquiring means 50 from metadata storage device 31.

The switching destination content metadata acquiring means 52 acquires the metadata that corresponds to an identifier of the switching destination content acquired by the display order list acquiring means 50 from metadata storage device 31.

Additionally, a configuration of the image playback system other than this is similar to that of the first embodiment (see Fig. 1), so a numeral code identical to that of Fig. 1 is affixed, and its explanation is omitted.

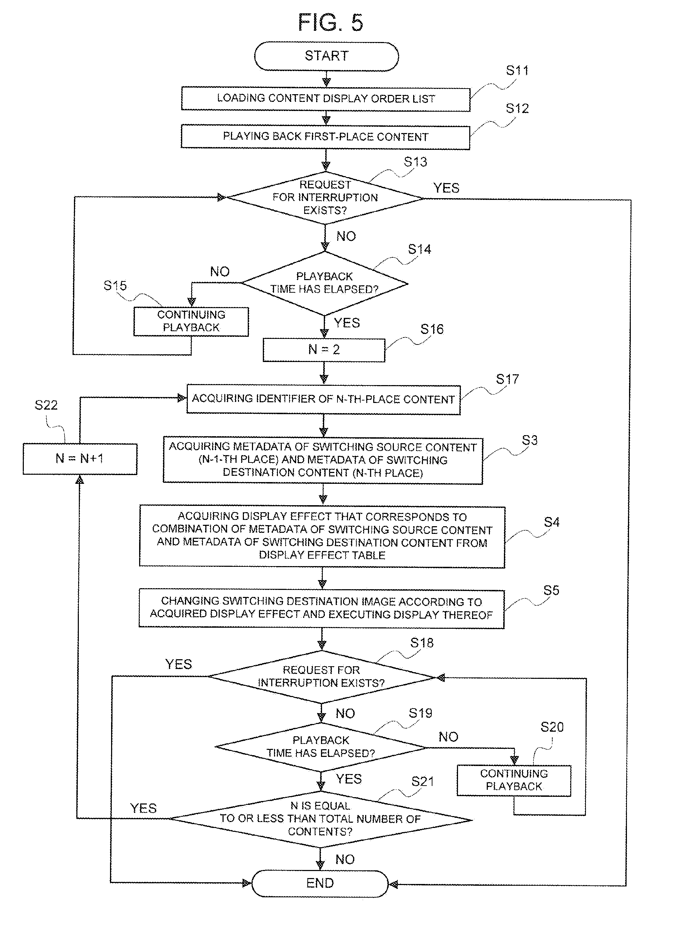

Next, an operation of this embodiment will be explained in details by making a reference to Fig. 4 and Fig. 5. Fig. 5 is a flowchart illustrating an operation of the image playback system in the second embodiment.

Operations of the display effect deciding means 23 and the display effect inserting means 24 in this embodiment shown in steps S3 to S5 of Fig. 5 are identical to that of means 23 and 24 in the first embodiment, respectively, so its explanation is omitted.

In this embodiment, firstly, the display order list acquiring means 50 acquires the display order list stored in the display order list storage device 61 (step S11). And, it plays back the first-place content described in the display order list only for a pre-decided playback time (step S12 to step S15).

That is, the display order list acquiring means 50 acquires the first-place content described in the display order list from the content storage unit 32 and outputs it to the output device 4 (step S12). At this moment, the output device 4, when an interruption request is made (Yes of step S13), finishes the process immediately. When no interruption request is made (No of step S13), the output device 4 determines whether or not the pre-decided playback time has elapsed (step S14). When the playback time has elapsed (Yes), the operation shifts to a step S16, and when the playback time has not elapsed (No), it continues the playback (step S15) and the operation shifts to the step S13.

In the step S16, the display order list acquiring means 50 substitutes 2 for N indicative of the order of the contents each of which is a target of playback. That is, the second-place content described in the display order list becomes a target of playback.

In a step S17, the display order list acquiring means 50 acquires an identifier of the N-th-place content described in the displays order list. In the step S3, the switching destination content metadata acquiring means 52 acquires a metadata of the N-th-place content (that is, the switching destination content) described in the display order list, and the switching source content metadata acquiring means 51 acquires a metadata of the content described in the N-1-th place (that is, the switching source content).

Next, similarly to the first embodiment, the display effect deciding means 23 selects the corresponding display effect from the display effect table based upon a combination of the metadata for switching source image and the metadata for the switching destination image, and simultaneously therewith, decides the parameter responding to a necessity (step S4).

And, the display effect inserting means 24 calls up the switching destination content from the content storage unit 32, changes the background of the switching destination image according to the display effect acquired from the display effect table, and displays it (step S5). The displayed content is played back only for a pre-decided playback time (step S18 to step S20).

At this moment, when an interruption request is made (Yes of step S18), the process is immediately finished. When no interruption request is made (No of step S18), it is determined whether or not the pre-decided playback time has elapsed (step S19). When the playback time has elapsed (Yes), the operation shifts to a step S21, and when the playback time has not elapsed (No), the playback is continued (step S20) and the operation shifts to the step S18.

When the playback is finished, it is confirmed whether or not the N+1-th-place content exists in the display order list (step S21), and when it exists (Yes), 1 is added to N (step S22) and the operation shifts to a step S17. When it does not exist (No), a series of the process is finished.

Next, an effect of this embodiment will be explained. In this embodiment, the display effect can be flexibly selected, depending upon a transition from which switching source content to which switching destination content. The effect of this embodiment lies in a point that not only a switchover of the content can be visually recognized in a simple manner, but also the switched content can be grasped even in the case that the viewer takes his/her eyes off the screen in a moment that the content has been switched because the display effect is added by reflecting the switching source content as well into the selection of the display effect.

### EMBODIMENT 3

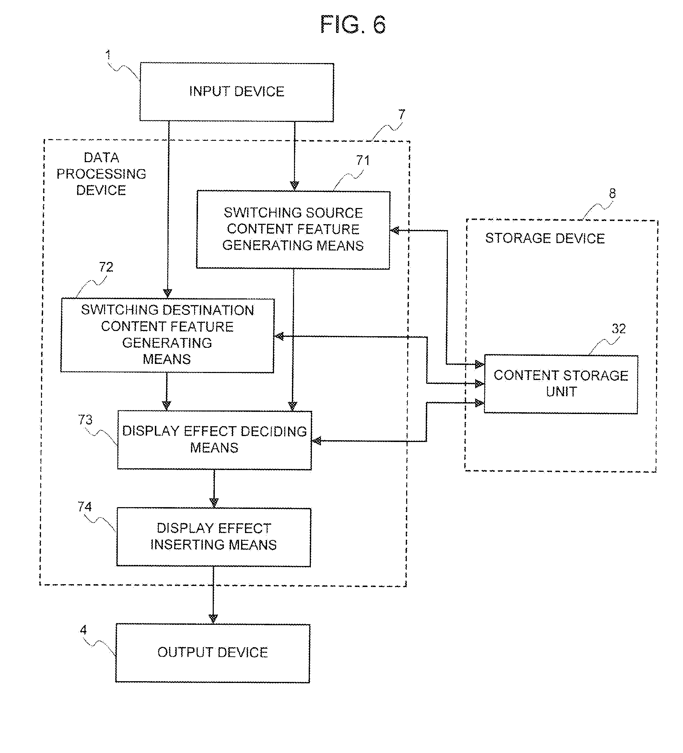

Next, the best mode for carrying out the third invention of the present invention will be explained in details by making a reference to the accompanied drawings. Fig. 6 is a block diagram illustrating a third embodiment of the image playback system in accordance with the present invention. The image playback system shown in Fig. 6 is provided with an input device 1, a data processing device 7, a storage device 8, and an output device 4.

Upon making a reference to Fig. 6, the third embodiment of the image playback system of the present invention differs from the first embodiment in a point that the data processing device 7 includes a switching source content feature generating means 71, a switching destination content feature generating means 72, a display effect deciding means 73, and a display effect inserting means 74, which have replaced the switching source content metadata acquiring means 21, the switching destination content metadata acquiring means 22, the display effect deciding means 23, and the display effect inserting means 24 of the data processing device 2 in the first embodiment shown in Fig. 1, respectively, and in a point that the storage device 8 includes only a content storage device 32.

The switching source content feature generating means 71 acquires the switching source content acquired by the content storage unit 32, and generates the color representative of the content as a feature from the acquired switching source content. The switching source content feature generating means 71 employs, for example, the method of, after quantizing and counting respective colors of the pixels that are included in the images that are included in last n (n is a natural number) frames, deciding the color of which an appearance frequency is highest as a representative color as a method of generating the representative color.

The switching destination content feature generating means 72 acquires the switching destination content acquired by the content storage unit 32. The feature generation method of the switching destination content feature generating means 72, similarly to the switching source content feature generating means 71, generates the color representative of the content as a feature. It employs, for example, the method of, after quantizing and counting the respective colors of the pixels that are included in the images that are included in leading m (m is a natural number) frames, deciding the color of which an appearance frequency is highest as a representative color as a method of generating the representative color.

The display effect deciding means 73 decides the display effect based upon a combination of the feature generated from the switching source image and the feature generated from the switching destination image. Specifically, it decides the color, of which a distance to the representative color of the switching source image becomes maximized within the range that the representative color of the switching destination image permits, to be a background color.

The display effect inserting means 74 calls up the switching destination content from the content storage unit 32, and displays the background color decided by the display effect deciding means 73 with it superposed upon the switching destination image.

Additionally, in this embodiment, the representative color was employed as a feature; however the feature is not limited to the representative color so long as it does not depart from the spirit and scope of the present invention, and other features such a color layout, a texture, a pattern and a shape are acceptable. Further, the display effect may be decided by employing both of the metadata and the feature.

Next, an effect of this embodiment will be explained. In this embodiment, the display effect of the switching destination content can be flexibly selected, depending upon a transition from which switching source content to which switching destination content. The effect of this embodiment lies in a point that not only a switchover of the content can be visually recognized in a simple manner, but also the switched content can be grasped even in the case that the viewer takes his/her eyes off the screen in a moment that the content has been switched because the display effect is added by reflecting the switching source content as well into the selection of the display effect.

### EMBODIMENT 4

Next, the best mode for carrying out the fourth invention of the present invention will be explained in details by making a reference to the accompanied drawings.

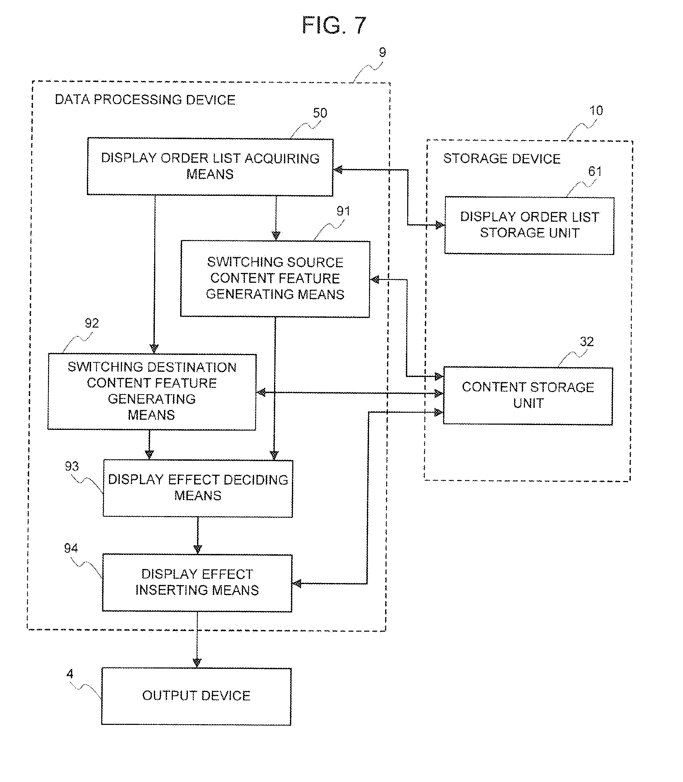

Fig. 7 is a block diagram illustrating a fourth embodiment of the image playback system in accordance with the present invention. The image playback system shown in Fig. 7 is provided with a data processing device 9, a storage device 10, and an output device 4.

Upon making a reference to Fig. 7, the fourth embodiment of the image playback system of the present invention differs from the second embodiment in a point that the data processing device 9 includes a switching source content feature generating means 91, a switching destination content feature generating means 92, a display effect deciding means 93, and a display effect inserting means 94, which have replaced the switching source content metadata acquiring means 51, the switching destination content metadata acquiring means 52, the display effect deciding means 23, and the display effect inserting means 24 of the data processing device 5 in the second embodiment shown in Fig. 4, respectively.

The switching source content feature generating means 91 acquires the switching source content acquired by the content storage unit 32, and generates the color representative of the content as a feature from the acquired switching source content. The switching source content feature generating means 91 employs, for example, the method of, after quantizing and counting respective colors of the pixels that are included in the images that are included in last n (n is a natural number) frames, deciding the color of which an appearance frequency is highest as a representative color as a method of generating the representative color.

The switching destination content feature generating means 92 acquires the switching destination content acquired by the content storage unit 32. The feature generation method of the switching destination content feature generating means 92, similarly to the switching source content feature generating means 91, generates the color representative of the content as a feature. It employs, for example, the method of, after quantizing and counting the respective colors of the pixels that are included in the images that are included in leading m (m is a natural number) frames, deciding the color of which an appearance frequency is highest as a representative color as a method of generating the representative color.

The display effect deciding means 93 decides the display effect based upon a combination of the feature generated from the switching source image and the feature generated from the switching destination image. Specifically, it decides the color, of which a distance to the representative color of the switching source image becomes maximized within the range that the representative color of the switching destination image permits, to be a background color.

The display effect inserting means 94 calls up the switching destination content from the content storage unit 32, and displays the background color decided by the display effect deciding means 93 with it superposed upon the switching destination image.

Additionally, in this embodiment, the representative color was employed as a feature; however the feature is not limited to the representative color so long as it does not depart from the spirit and scope of the present invention, and other features such a color layout, a texture, a pattern and a shape are acceptable.

Next, an effect of this embodiment will be explained. In this embodiment, the display effect of the switching destination content can be flexibly selected, depending upon a transition from which switching source content to which switching destination content. For this, the effect lies in a point that a division of the images can be identified more simply. The effect of this embodiment lies in a point that not only a switchover of the content can be visually recognized in a simple manner, but also the switched content can be grasped even in the case that the viewer takes his/her eyes off the screen in a moment that the content has been switched because the display effect is added by reflecting the switching source content as well into the selection of the display effect.

### EMBODIMENT 5

Next, the best mode for carrying out the fifth invention of the present invention will be explained in details by making a reference to the accompanied drawings.

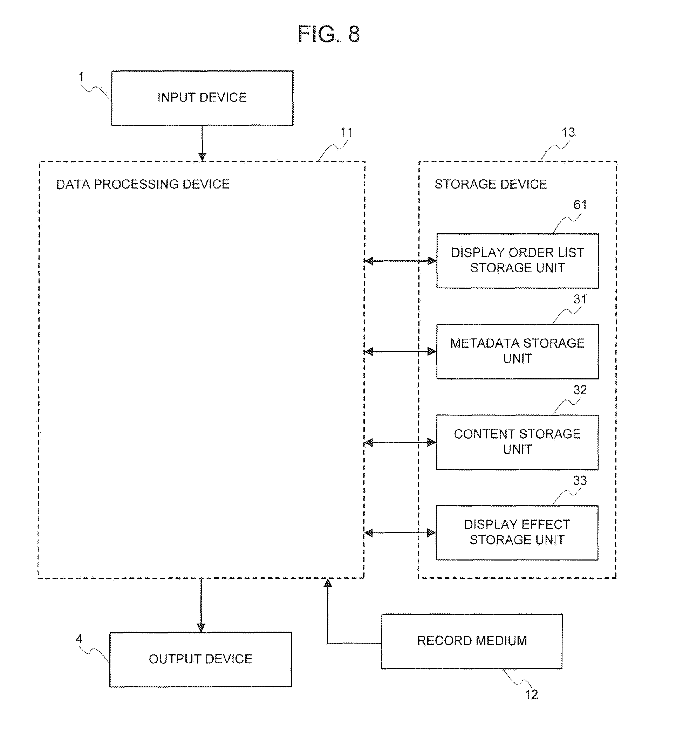

Fig. 8 is a block diagram illustrating a fifth embodiment of the image playback system in accordance with the present invention. The image playback system shown in Fig. 8 is provided with an input device 1, a data processing device 11, a storage device 13, a record medium 12, and an output device 4.

Upon making a reference to Fig. 8, the fifth embodiment of the present invention, similarly to the first embodiment to the fourth embodiment of the present invention, is provided with the input device, the data processing device, the record device, and the output device, and besides, the record medium 12 into which a retrieval program has been recorded. This record medium 12 could be a magnetic disc, a semiconductor memory, a CD-ROM, or a record medium other than these.

The retrieval program, which is loaded into the data processing device 11 from the record medium 12, controls an operation of the data processing device 11, thereby enabling a metadata record unit 31, a content storage unit 32, a display effect record unit 33, and a display order list storage unit 61 to be generated in the storage device 13, similar to the storage device 3, the storage device 6, the storage device 8, and the storage device 10 in the first embodiment to the fourth embodiment, respectively.

The data processing device 11 performs a process identical to that of the data processing device 2, the data processing device 5, the data processing device 7, and the data processing device 9 in the first embodiment to the fourth embodiment, respectively, under control of the retrieval program.

In accordance with the fifth embodiment, similar to the first embodiment to the fourth embodiment, there exists an effect that whether the content has been switched can be easily determined.

### [HOW THE INVENTION IS CAPABLE OF INDUSTRIAL EXPLOITATION]

The present invention is effectively applicable to the image playback system, the image playback method, and the image playback program for playing back a plurality of the still images or the moving images while automatically or manually switching them, and more particularly to the system and the program for playing back the content recorded into the record medium. Specifically, it is applicable to the playback of the content accumulated in a hard disc recorder, a home server, a personal computer, a portable telephone, a DVD, a digital camera, etc. Further, it is also applicable to the display at the moment of receiving a digital television program and switching the channel, or the playback display of the content that is included in the record medium of the server etc. accessed by the personal computer, the portable telephone, or the like via the network such as the Internet.

## Claims

1. An image playback system for playing back a plurality of images while switching them, **characterized in** comprising:
a display effect deciding means for deciding one display effect from among a plurality of display effects pre-decided based upon a combination of a metadata for a before-switching image and a metadata for an after-switching image; and
a displaying means for changing the after-switching image according to the display effect decided by said display effect deciding means and displaying it.

2. An image playback system according to claim 1, **characterized in that** the display effect deciding means decides the display effect with which a switchover is emphasized all the more as a difference between a feature of the before-switching image and a feature of the after-switching image becomes small.

3. An image playback system according to claim 1, **characterized in that** the display effect deciding means decides a background color of the after-switching image based upon a difference between a representative color of the before-switching image and a representative color of the after-switching image.

4. An image playback system according to claim 1, **characterized in that** the display effect deciding means specifies the after-switching image based upon a pre-decided playback order of the images.

5. An image playback system for playing back a plurality of images while switching them, **characterized in** comprising:
a first feature extracting means for extracting a feature for a before-switching image;
a second feature extracting means for extracting a feature for an after-switching image;
a display effect deciding means for deciding a display effect based upon a combination of the feature extracted by said first feature extracting means and the feature extracted by said second feature extracting means; and
a displaying means for changing the after-switching image according to the display effect decided by said display effect deciding means and displaying it.

6. An image playback system according to claim 5, **characterized in that** the display effect deciding means decides the display effect with which a switchover is emphasized all the more as a difference between a feature of the before-switching image and a feature of the after-switching image becomes small.

7. An image playback system according to claim 5, **characterized in that** the display effect deciding means decides a background color of the after-switching image based upon a difference between a representative color of the before-switching image and a representative color of the after-switching image.

8. An image playback system according to claim 5, **characterized in that** the display effect deciding means specifies the after-switching image based upon a pre-decided playback order of the images.

9. An image playback method of playing back a plurality of images while switching them, **characterized in that** a control means for a controlling a system executes, according to a program:
a display effect decision step of deciding one display effect from among a plurality of display effects pre-decided based upon a combination of a metadata for a before-switching image and a metadata for an after-switching image; and
a display step of changing the after-switching image according to the display effect decided in said display effect decision step and displaying it.

10. An image playback method according to claim 9, **characterized in**, in the display effect decision step, deciding the display effect with which a switchover is emphasized all the more as a difference between a feature of the before-switching image and a feature of the after-switching image becomes small.

11. An image playback method according to claim 9, **characterized in**, in the display effect decision step, deciding a background color of the after-switching image based upon a difference between a representative color of the before-switching image and a representative color of the after-switching image.

12. An image playback method according to claim 9, **characterized in**, in the display effect decision step, specifying the after-switching image based upon a pre-decided playback order of the images.

13. An image playback method of playing back a plurality of images while switching them, **characterized in that** a control means for a controlling a system executes, according to a program:
a first feature extraction step of extracting a feature for a before-switching image;
a second feature extraction step of extracting a feature for an after-switching image;
a display effect decision step of deciding a display effect based upon a combination of the feature extracted in said first feature extraction step and the feature extracted in said second feature extraction step; and
a display step of changing the after-switching image according to the display effect decided in said display effect decision step and displaying it.

14. An image playback method according to claim 13, **characterized in**, in the display effect decision step, deciding the display effect with which a switchover is emphasized all the more as a difference between a feature of the before-switching image and a feature of the after-switching image becomes small.

15. An image playback method according to claim 13, **characterized in**, in the display effect decision step, deciding a background color of the after-switching image based upon a difference between a representative color of the before-switching image and a representative color of the after-switching image.

16. An image playback method according to claim 13, **characterized in**, in the display effect decision step, specifying the after-switching image based upon a pre-decided playback order of the images.

17. An image playback program being installed into a controlling means for controlling a system, said system playing back a plurality of images while switching them, **characterized in** causing said controlling means to execute:
a display effect decision process of deciding one display effect from among a plurality of display effects pre-decided based upon a combination of a metadata for a before-switching image and a metadata for an after-switching image; and
a display process of changing the after-switching image according to the display effect decided in said display effect decision process and displaying it.
